# EUROPEAN PATENT SPECIFICATION

(11) **EP 1 499 099 B1**
(45) Date of publication and mention of the grant of the patent: **29.10.2008**
(21) Application number: 03733298.8
(22) Date of filing: 05.06.2003
(51) Int. Cl.: H04M 3/493

(54) **COMMUNICATION SYSTEM, DATA PROCESSING CONTROL METHOD, SERVER, AND DATA PROCESSING CONTROL PROGRAM**
KOMMUNIKATIONSSYSTEM, DATENVERARBEITUNGSSTEUERUNGSVERFAHREN, SERVER UND DATENVERARBEITUNGSSTEUERUNGSPROGRAMM
SYSTEME DE COMMUNICATION, PROCEDE DE CONTROLE DU TRAITEMENT DE DONNEES, SERVEUR ET PROGRAMME DE CONTROLE DU TRAITEMENT DE DONNEES

(30) Priority: 06.06.2002 JP 2002166194
(43) Date of publication of application: 19.01.2005
(73) Proprietor: NTT DoCoMo, Inc., Tokyo 100-6150 (JP)
(72) Inventor: KODAMA, Mitsuru Ntt DoCoMo, Inc., Chiyoda-ku, Tokyo 100-6150 (JP); TSUJI, Kenjirou NTT DoCoMo, Inc., Chiyoda-ku, Tokyo 100-6150 (JP); TAKAHARA, Kouichi NTT DoCoMo, Inc., Chiyoda-ku, Tokyo 100-6150 (JP)
(74) Representative: Viering, Jentschura & Partner
(86) International application number: PCT/JP2003/007140
(87) International publication number: WO 2003/105455

(56) References cited:
- DE-C1- 19 953 272
- JP-A- 2000 059 517
- JP-A- 2002 099 861
- JP-A- 2002 359 687
- US-B1- 6 243 443
- BROWN A. AND VAUDREUIL GREG.: 'ENUM service reference model' INTERNET DRAFT, DRAFT OF TELEPHONE NUMBER MAPPING (ENM) IETF WORKING GROUP, [Online] 23 February 2001, page 8, XP002969311 Retrieved from the Internet: <URL:http://www.watersprings.org/pub/id/dra ft-ietf-enum-operation-02.txt> [retrieved on 2003-06-27]
- NTT ISDN SUISHINBU: 'Kaiteiban ISDN Application Idea Shu', 10 May 1993, THE TELECOMMUNICATIONS ASSOCIATION, ISBN 4-88549-002-2 pages 38 - 39, XP002971016

## Description

### Technical Field

The present invention relates to a communication system adapted to perform provision of a service or delivery of a content in response to a request from an end user by making use of subaddresses, a data processing control method, a server forming the communication system, a data processing control program to be executed by a computer mounted on the server.

"Data" in the present specification is assumed to encompass still image data, dynamic video data varying with time (including both data with audio and data without audio), and a variety of streaming data of audio data and others that can be processed by various information processing apparatus (computers) and information terminals (PDAs, cellular phones, PHSs, etc.).

### Background Art

Nowadays, telephones are widely used to make orders or reservations, e.g., ticket reservations, orders of commercial goods, and so on, and cases of telephone use are rapidly expanding in modern society.

Under such circumstances, however, there are still restrictions on the number of terminating telephone numbers as described below. Namely, users must pay a predetermined charge for each dial-in number or direct inward dialing number to ISDN, and there exists such a constraint that the maximum number of available numbers per interface group of ISDN is 1000.

Telephone companies manage the dial-in telephone numbers and provide them to service providers, and thus the service providers are not allowed to set numbers at the discretion thereof; therefore, flexibility is low in terms of setting of numbers.

On the other hand, there is also a spreading use form in which end users download desired contents such as video data, audio data, etc. through the Internet network from external servers and play them by their own information terminals. There are a variety of contents provided in this form, and in general, the contents are often managed in hierarchical fashion; for this reason, there was a problem that a lot of efforts were required before arrival at a desired content. There was another problem that explosion of types of contents caused a shortage of telephone numbers necessary for connection of each content to a personal information terminal.

Document US 6 243 443 B1 discloses a method of providing content items held on an internet server to an end user who might access the server via a telephone. In this known method, a content code for the desired item can either be entered by a user as a telephone number with an added subaddress that is then converted to an IP address or the IP address is derived from the requestor's telephone number. However, this method does not easily allow for collecting and integrating user data such as name, age, gender, interests, etc. and providing marketing and services in accordance with a user's stored profile information.

The present invention has been accomplished in order to solve the above problems and an object of the invention is to allow additional user data to be easily accessed whenever a user requests a service.

In order to solve this object, a communication system according to claim 1, a method according to claim 4, a server according to claim 5 and a program according to claim 6 are provided. Preferred embodiments of the invention are defined in the dependent subclaims.

### Disclosure of the Invention

In order to achieve the above object, a communication system according to the present invention is a communication system comprising an information terminal for an end user to request provision of a service or delivery of a content; and a server for carrying out provision of a service or delivery of a content according to a request, wherein the information terminal comprises: input means for input of a subaddress-added telephone number in which a subaddress corresponding to the service or content requested is added to a telephone number corresponding to the server as a requestee; and transmitting means for transmitting request information containing the input subaddress-added telephone number, through a circuit switching network to the server, and wherein the server comprises: a service database in which service data about the service or content data is stored in correlation with IP addresses; receiving means for receiving the request information from the information terminal as a requestor; subaddress recognizing means for recognizing the subaddress included in the received request information; address converting means for converting the recognized subaddress to an IP address, based on a predetermined rule or predetermined correlation information; data retrieving means for retrieving service data or content data correlated with the IP address obtained by the conversion, from the service database; and data outputting means for providing an output of the retrieved service data or content data by transmitting the data to the requestor information terminal or by displaying the data for an operator on the server side.

A data processing control method according to the present invention is a data processing control method executed in a communication system, the communication system comprising: an information terminal for an end user to request provision of a service or delivery of a content; and a server comprising a service database in which service data about the service or content data is stored in correlation with IP addresses, and configured to perform provision of a service or delivery of a content according to a request, the data processing control method comprising: an inputting step of inputting a subaddress-added telephone number in which a subaddress corresponding to the service or content requested is added to a telephone number corresponding to the server as a requestee, at the information terminal; a transmitting step of transmitting request information containing the input subaddress-added telephone number, through a circuit switching network to the server, at the information terminal; a receiving step of receiving the request information from the information terminal as a requestor, at the server; a subaddress recognizing step of recognizing the subaddress included in the received request information, at the server; an address converting step of converting the recognized subaddress to an IP address, based on a predetermined rule or predetermined correlation information, at the server; a data retrieving step of retrieving from the service database, service data or content data correlated with the IP address obtained by the conversion, at the server; and a data outputting step of providing an output of the retrieved service data or content data by transmitting the data to the requestor information terminal or by displaying the data for an operator on the server side, at the server.

The operation and effect of these aspects of the invention will be described based on the invention applied to the "communication system". In the communication system comprising the information terminal for the end user to request provision of a service or delivery of a content and the server for performing provision of a service or delivery of a content according to a request, when the end user of the information terminal enters a subaddress-added telephone number in which a subaddress corresponding to the requested service or content is added to a telephone number corresponding to the server as a requestee or requested party, for example, through the input means such as a keyboard, a special operation, a click on Web (so called "Phone to" or "AV to") or the like, the transmitting means transmits the request information containing the input subaddress-added telephone number through the circuit switching network to the server.

When the server receives the request information through its receiving means from the requestor information terminal, the subaddress recognizing means thereof recognizes the subaddress included in the received request information. The address converting means converts the recognized subaddress to an IP address and the data retrieving means retrieves the service data or content data correlated with the IP address obtained by the conversion, from the service database. Then the data outputting means provides an output of the retrieved service data or content data by transmitting the data to the requestor information terminal or by displaying the data for the operator on the server side.

Since the use of subaddresses attached to telephone numbers dramatically increases the number of numbers available for allocation, the system is liberated from the conventional restrictions on the total number of dial-in numbers. The service providers are not allowed to allocate telephone numbers at the discretion thereof, whereas the service providers are allowed to allocate subaddresses at the discretion thereof; therefore, the system can offer increased flexibility in allocation of numbers. The increase in the number of available numbers and the increase in the flexibility in allocation permits the service providers to allocate numbers finely to target goods or target contents, whereby it becomes feasible to specify a target good or a target content easier and to display or transmit it by simple operation.

Meanwhile, the present invention enhances the convenience when a telephone number of the requestor information terminal (an originator telephone number) is also used as follows, in addition to the subaddress.

Namely, the communication system according to the present invention is preferably constructed in a configuration wherein the transmitting means of the information terminal transmits the request information also containing a telephone number of the information terminal in addition to the subaddress-added telephone number, to the server, and wherein the server further comprises: a user database in which user data about the end user of the requestor information terminal is stored in correlation with the telephone number of the requestor information terminal; requestor recognizing means for recognizing the telephone number of the requestor information terminal included in the received request information; user data retrieving means for retrieving the user data correlated with the recognized telephone number, from the user database; and user data outputting means for providing an output of the retrieved user data by displaying the data for the operator on the server side.

The data processing control method according to the present invention is preferably configured so that the server further comprises user database in which user data about the end user of the requestor information terminal is stored in correlation with a telephone number of the requestor information terminal, so that the transmitting step is to transmit the request information also containing a telephone number of the information terminal in addition to the subaddress-added telephone number, to the server, and so that the method further comprises a requestor recognizing step of recognizing the telephone number of the requestor information terminal included in the received request information, at the server; a user data retrieving step of retrieving from the user database user data correlated with the recognized telephone number, at the server; and a user data outputting step of providing an output of the retrieved user data by displaying the data for the operator on the server side, at the server.

In these cases, when the transmitting means of the information terminal transmits to the server the request information also containing the telephone number of the information terminal in addition to the subaddress-added telephone number, the server with the user database makes the requestor recognizing means recognize the telephone number of the requestor information terminal included in the received request information and makes the user data retrieving means retrieve the user data correlated with the recognized telephone number, from the user database. Then, the retrieved user data is displayed for the server-side operator by the user data outputting means. This makes it feasible to automatically display the user data of the user as a requestor, using the telephone number of the requestor's information terminal as a key, whereby the server-side operator can quickly identify the user data of the requestor user. When this mode is applied to the CTI (Computer Telephony Integration) system, a provider can promptly capture commodities or services desired by an end user making a call, from subaddresses, and also promptly capture data about the end user (e.g., name, gender, age, interests, past order information, etc.) and, therefore, the provider can make an effective proposal on provision of services or the like according to the user data.

In the invention of the communication system and the invention of the data processing control method described above, preferably, the subaddress is defined in correlation with a predetermined classification about a commodity or a service. Since the service provider is allowed to freely allocate subaddresses as described above and the number of available numbers is extremely large, the service provider can determine subaddresses in correlation with detailed classifications about commodities or services, whereby it becomes feasible to readily specify many types of commodities or services. When the subaddress is recognized based on the above correlation, a commodity or a service corresponding thereto can be quickly specified, and efforts can be reduced both on the call receiving side of the service provider in CTI and on the end user side; therefore, it is feasible to reduce man-caused errors in transmission of information (miscommunications due to fluffs or mishearing).

In the invention of the above communication system, preferably, the input means of the information terminal is configured so that the subaddress-added telephone number can be entered by end user's selection on a predetermined screen displaying a candidate for input of the subaddress-added telephone number or by end user's direct entry. In the invention of the data processing control method, the inputting step is preferably to input the subaddress-added telephone number by end user's selection on a predetermined screen displaying a candidate for input of the subaddress-added telephone number or by end user's direct entry. This permits the user to enter the subaddress-added telephone number easily by simply selecting the desired candidate on the predetermined screen displaying the input candidate, whereby it becomes feasible to prevent man-caused errors, from being made by the end user and to enter a new subaddress-added telephone number, thereby retaining the flexibility about entry of number.

Incidentally, the present invention can also be taken from each of aspects of a server forming the communication system, a data processing control program to be executed by a computer of the server, and a computer-readable recording medium, and can be described as follows.

Namely, a server according to the present invention is a server for performing provision of a service or delivery of a content in response to a request for provision of the service or a request for delivery of the content made by an end user, the server comprising: a service database in which service data about the service or content data is stored in correlation with IP addresses; receiving means for receiving request information containing a subaddress-added telephone number in which a subaddress corresponding to the service or content requested is added to a telephone number corresponding to the server as a requestee, through a circuit switching network from an information terminal as a requestor; subaddress recognizing means for recognizing the subaddress included in the received request information; address converting means for converting the recognized subaddress to an IP address, based on a predetermined rule or predetermined correlation information; data retrieving means for retrieving service data or content data correlated with the IP address obtained by the conversion, from the service database; and data outputting means for providing an output of the retrieved service data or content data by transmitting the data to the requestor information terminal or by displaying the data for an operator on the server side.

The above server is preferably constructed in a configuration further comprising a user database in which user data about the end user of the requestor information terminal is stored in correlation with a telephone number of the requestor information terminal; requestor recognizing means for recognizing the telephone number of the requestor information terminal included in the request information also containing the telephone number of the information terminal in addition to the subaddress-added telephone number; user data retrieving means for retrieving the user data correlated with the recognized telephone number, from the user database; and user data outputting means for providing an output of the retrieved user data by displaying the data for the operator on the server side.

The subaddress is preferably defined in correlation with a predetermined classification about a commodity or a service.

A data processing control program according to the present invention is a data processing control program to be executed by a computer mounted on a server comprising a service database in which service data about services or content data is stored in correlation with IP addresses; and adapted to perform provision of a service or delivery of a content in response to a request for provision of the service or a request for delivery of the content made by an end user, the data processing control program letting the computer execute the following steps; a receiving step of receiving request information containing a subaddress-added telephone number in which a subaddress corresponding to the service or content requested is added to a telephone number corresponding to the server as a requestee, through a circuit switching network from an information terminal as a requestor; a subaddress recognizing step of recognizing the subaddress included in the received request information; an address converting step of converting the recognized subaddress to an IP address, based on a predetermined rule or predetermined correlation information; a data retrieving step of retrieving service data or content data correlated with the IP address obtained by the conversion, from the service database; and a data outputting step of providing an output of the retrieved service data or content data by transmitting the data to the requestor information terminal or by displaying the data for an operator on the server side.

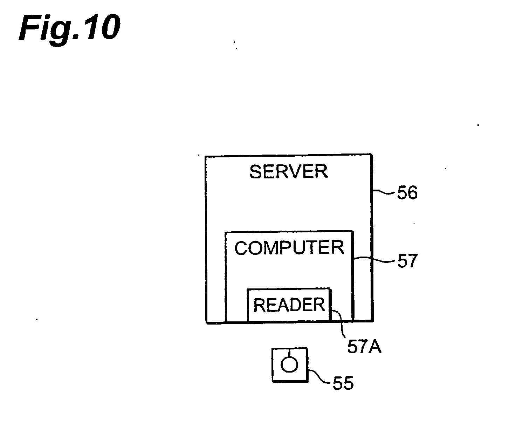

The present invention can also be taken as a computer-readable recoding medium containing a record of the above data processing control program. For example, as shown in Fig 10, the data processing control program recorded in the above recording medium 55 can be read by reader 57A of computer 57 mounted on server 56.

### Brief Description of the Drawings

Fig. 1 is an illustration showing a configuration of the communication system in the first and second embodiments.
Fig. 2 is an illustration showing a configuration of the server in the first embodiment.
Fig. 3A is an illustration showing an example of an input format of a subaddress-added telephone number.
Fig. 3B is an illustration showing request information containing a subaddress-added telephone number.
Fig. 4A is an illustration showing an example of allocation of subaddresses.
Fig. 4B is an illustration showing a storage format of the service database.
Fig. 5 is a flowchart showing processing executed by the server of the first embodiment.
Fig. 6A is an illustration showing an initial screen out of screen transition diagrams.
Fig. 6B is an illustration showing an input screen of login ID out of screen transition diagrams.
Fig. 6C is an illustration showing a content selection screen out of screen transition diagrams.
Fig. 6D is an illustration showing a screen during dialing after selection of a content out of screen transition diagrams.
Fig. 6E is an illustration showing a video display screen out of screen transition diagrams.
Fig. 7 is an illustration showing a configuration of the server in the second embodiment.
Fig. 8 is an illustration showing a storage format of the user database.
Fig. 9 is a flowchart showing processing executed by the server of the second embodiment.
Fig. 10 is an illustration showing a configuration of the recoding medium containing the record of the data processing control program, and peripheral equipment thereof.

### Best Mode for Carrying out the Invention

The first embodiment in which the present invention is applied to a video content delivery service to information terminals, and the second embodiment in which the present invention is applied to CTI, will be described as embodiments of the present invention in order with reference to the drawings.

### [First Embodiment]

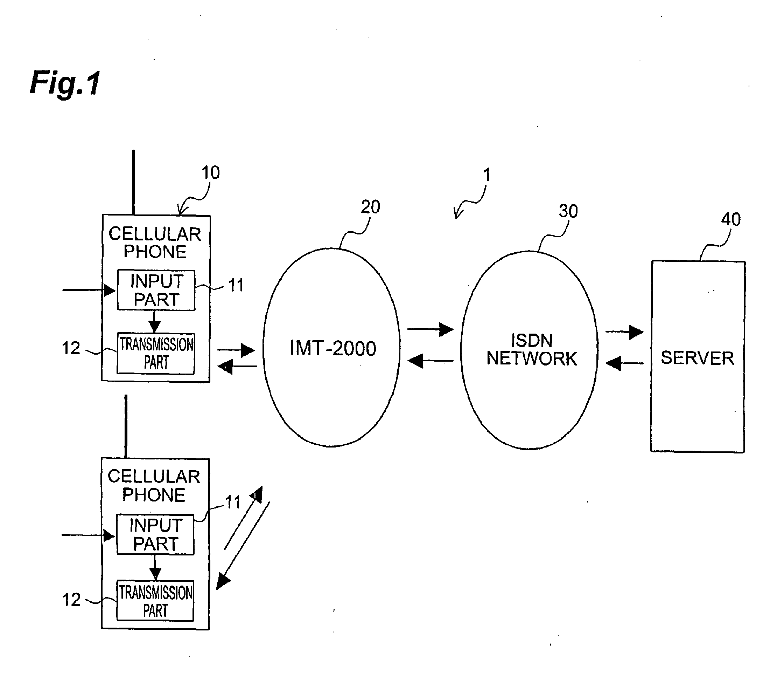

Fig. 1 is an illustration showing the configuration of communication system 1 in the present embodiment. As shown in this Fig. 1, the communication system 1 is comprised of a plurality of cellular phones 10 for end users to request provision of a service such as video content delivery or the like; and server 40 for performing provision of the service (video content delivery service in the present embodiment) in response to the request, and each cellular phone 10 is connectible through IMT-2000 network 20 and ISDN network 30 to the server 40. The cellular phones 10 herein correspond to the information terminals according to the present invention.

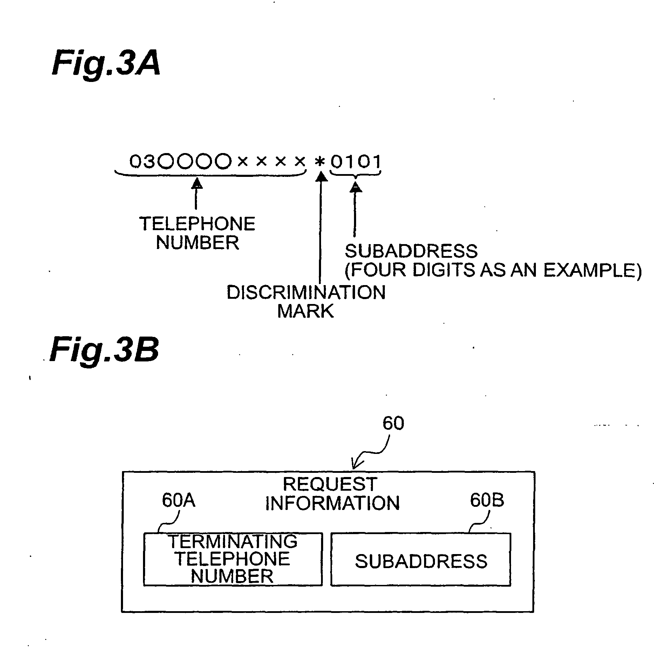

Each cellular phone 10 is provided with input part 11 for input of a telephone number in a predetermined format (Fig. 3A) for performing the request operation according to the present invention; and transmission part 12 for creating request information in a predetermined format (Fig. 3B) on the basis of the input telephone number and transmitting the request information thus created, to objective server 40.

The format of the subaddress-added telephone number adopted in the present invention is one based on International Standards of ISDN and IMT-2000. In the present specification, the description will be given using the simple format shown in Fig. 3A, for easier understanding of the description. As shown in Fig. 3A, the format of the telephone number entered through input part 11 by the end user contains a telephone number of objective server 40, a predetermined discrimination mark ("*" as an example herein) subsequent to the telephone number, and a subaddress (four digits as an example herein) subsequent to the discrimination mark. The use of the discrimination mark enables certain discrimination of the subaddress from the telephone number, so as to reduce input error of the subaddress-added telephone number, misreading of the subaddress, etc., thereby enabling processing to be executed on a stable basis.

With the telephone number entered in the format as described above, the transmission part 12 recognizes the number before the discrimination mark as a terminating telephone number and the number after the discrimination mark as a subaddress, creates the request information 60 containing the terminating telephone number 60A and subaddress 60B as shown in Fig. 3B, and transmits the request information 60 thus created, to objective server 40.

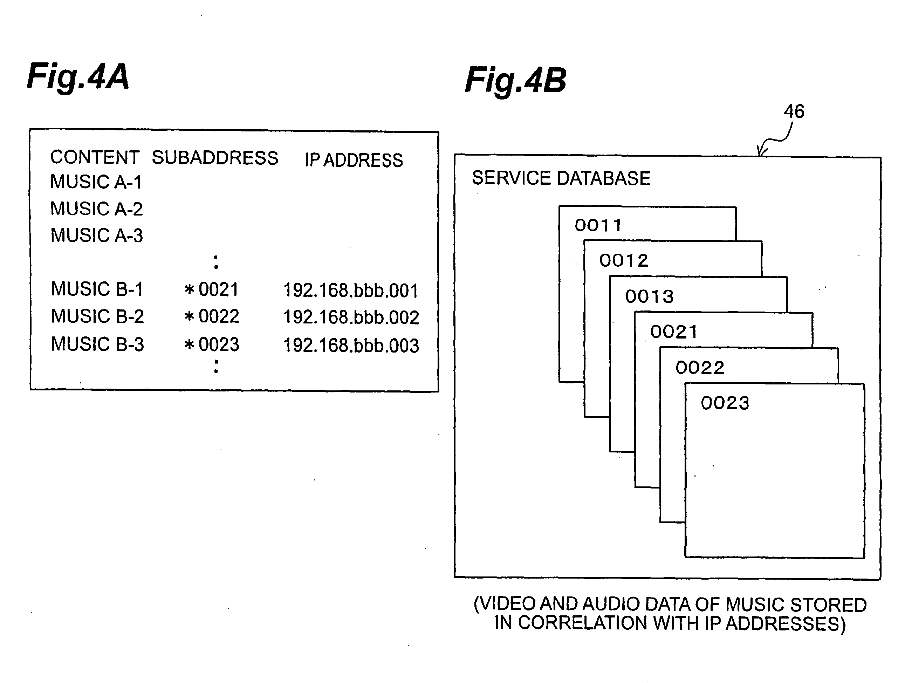

The above subaddress is preliminarily defined in correlation with each video content as a request target, as shown in Fig. 4A. For example, subaddress "0011" is defined in correlation with music A-1 of artist A, subaddress "0012" in correlation with music A-2 of artist A, and likewise, subaddress "0021" is defined in correlation with music B-1 of artist B, and subaddress "0022" in correlation with music B-2 of artist B.

Since the use of subaddresses attached to telephone numbers dramatically increases the number of numbers available for allocation, there is the advantage that the system is liberated from the conventional constraint on the total number of dial-in numbers. The service providers are not allowed to allocate telephone numbers at the discretion thereof, whereas the service providers are allowed to allocate subaddresses at the description thereof; therefore, the flexibility can be increased in allocation of numbers.

With increase in the number of available numbers and increase in the flexibility in allocation, it becomes feasible to allocate numbers finely to target commodities or target contents and to specify a target commodity or a target content easier and display or transmit it by simple operation.

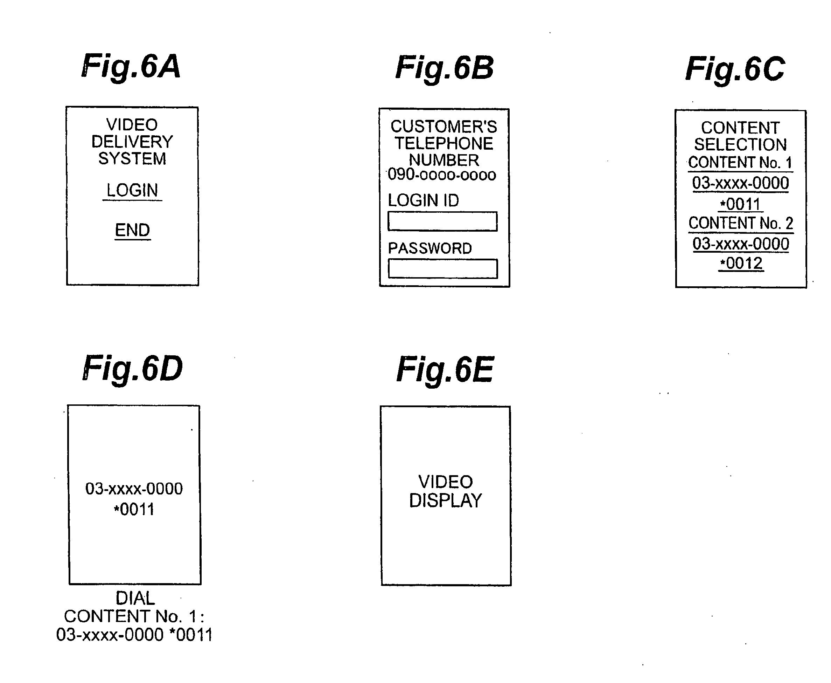

Incidentally, in the present embodiment the end users are allowed to enter a telephone number in the format of Fig. 3A through input part 11 by performing only a selection operation on a predetermined selection screen (e.g., see Fig. 6C) displaying candidates for input of telephone numbers. This liberates the end users from the efforts of memorizing telephone numbers of many digits with the discrimination mark and subaddresses and inputting them and prevents occurrence of misremembering or misentry of a telephone number, thereby offering the advantage of smooth utilization of the service to the end users.

Of course, the end users are also allowed to directly enter a telephone number on an unrepresented screen, and this enables the users to enter any other telephone number than those on the selection screen, or a new subaddress-added telephone number; therefore, the flexibility can be retained about entry of number.

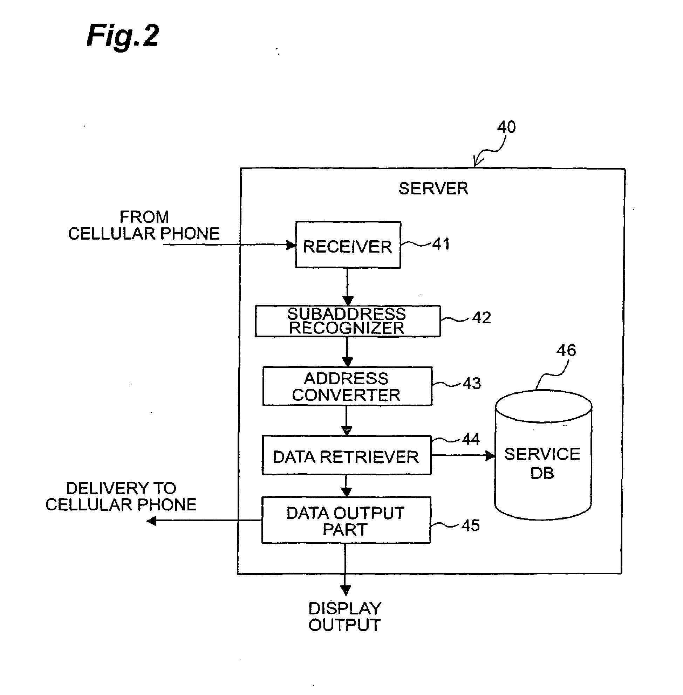

As shown in Fig. 2, the server 40 is comprised of service database 46 in which data about the provided service (video content data herein) is stored in correlation with IP addresses; receiver 41 for receiving the request information from cellular phone 10 as a requestor; subaddress recognizer 42 for recognizing the subaddress included in the received request information; address converter 43 for converting the recognized subaddress to an IP address on the basis of predetermined conversion correspondence information; data retriever 44 for retrieving data (video content data herein) correlated with the LP address obtained by the conversion, from service database 46; and data output part 45 for delivering the retrieved video content data to the requestor cellular phone 10. The data output part 45 is assumed to have a function of displaying operational states of the respective parts of server 40, a warning message from the system, etc. for the operator of the server 40.

Fig. 2 is a block diagram showing the various functions to be possessed by server 40, and these components may be housed in one physical device or in a complex of plural devices. For example, a potential configuration is such that server 40 is comprised of a complex of a host computer and a communication control device, the communication control device houses the receiver 41, subaddress recognizer 42, address converter 43, and data output part 45, and the host computer houses the data retriever 44 and service database 46.

Among these, the service database 46 stores a variety of video content data in association with IP addresses as shown in Fig. 4B, and the address converter 43 converts a subaddress to an IP address on the basis of the predetermined conversion correspondence information as shown in Fig. 4A. In this configuration, for example, supposing subaddress recognizer 42 recognizes subaddress "0011", address converter 43 converts the subaddress "0011" to IP address "192.168.aaa.001", data retriever 44 retrieves the video content data of music A-1 of artist A correlated with the IP address "192.168.aaa.001" from the service database 46, and then the data output part 45 outputs the video content data of music A-1 to the requestor cellular phone 10.

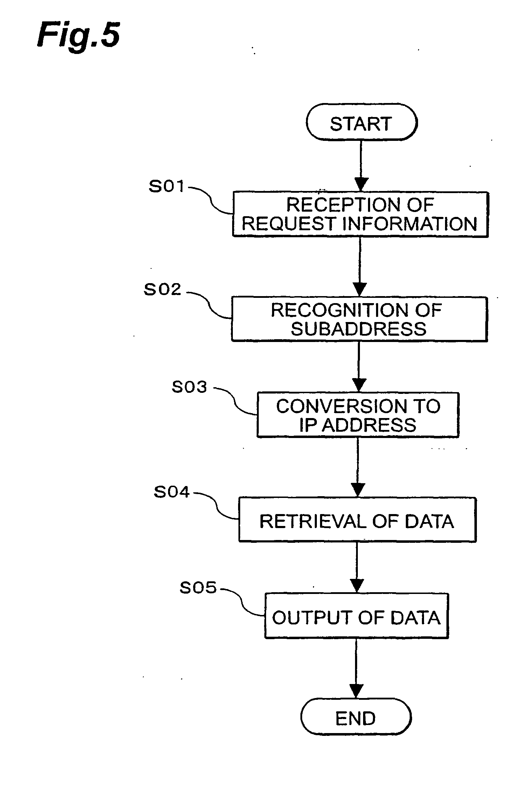

The operation in the first embodiment will be described below with reference to Figs. 5 and 6A-6E.

First, an example of the content delivery request operation by an end user will be described using the screen transition diagrams of Figs. 6A-6E. In the initial step the end user performs a predetermined operation on cellular phone 10 to display the initial screen of the video delivery system of Fig. 6A. From this initial screen, the end user performs the following operations, as an example, to display the content selection screen of Fig. 6C. Namely, when the end user selects "login" on the initial screen of Fig. 6A, the input screen of login ID of Fig. 6B is displayed. After the end user enters personal login ID and password, the content selection screen of Fig. 6C is displayed. When the end user selects content No. 1, for example, as a desired content, the transmission part 12 automatically dials "03-xxxx-0000*0011" corresponding to the selected content No. 1.

At this time, with the telephone number entered in the format shown in Fig. 3A, the transmission part 12 recognizes the digits before the discrimination mark as a terminating telephone number and the digits after the discrimination mark as a subaddress and creates the request information 60 containing the terminating telephone number 60A and subaddress 60B as shown in Fig. 3B, before dialing. Then it dials "03-xxxx-0000*0011" corresponding to content No. 1 selected as described above, is connected to server 40, and thereafter transmits the request information 60 thus created, to server 40.

The screen of Fig. 6D is displayed during this dialing operation. After the transmission part is connected to the server 40 and receives the video content of content No. 1 delivered from the server 40, the video content is displayed as shown in Fig 6E.

The operation of server 40 will be described along Fig. 5. When at server 40 the receiver 41 receives the request information 60 from the requestor cellular phone 10 (S01), the subaddress recognizer 42 recognizes subaddress "0011" from the subaddress 60B included in the received request information (S02) and the address converter 43 converts the recognized subaddress "0011" to IP address "192.168.aaa.001" on the basis of the predetermined conversion correspondence information (S03). Then the data retriever 44 retrieves the data (i.e., video content data of music A-1 of artist A) corresponding to the IP address "192.168.aaa.001" obtained by the conversion, from service database 46 (S04), and the data output part 45 delivers the video content data of music A-1 of artist A thus retrieved, to the requestor cellular phone 10 (S05).

According to the first embodiment as described above, the use of subaddresses attached to telephone numbers dramatically increases the number of numbers available for allocation, whereby the system is liberated from the conventional constraint on the total number of dial-in numbers. The service providers are not allowed to allocate telephone numbers at the discretion thereof, whereas the service providers are allowed to allocate subaddresses at the discretion thereof, which can enhance the flexibility in allocation of numbers. With increase in the number of numbers available for allocation and increase in the flexibility in allocation, it becomes feasible to allocate numbers finely to target commodities or target contents and to specify a target commodity or a target content easier and display or transmit it by simple operation.

Since the IMT-2000 network 20 is originally constructed according to the subaddress-transparent specifications, there is no need for a major modification on the network side (the IMT-2000 network and ISDN network) when the system is constructed in the configuration wherein cellular phone 10 creates and transmits the request information 60 containing the terminating telephone number 60A and subaddress 60B as described above. Namely, the present embodiment also offers the advantage that the system according to the present invention can be readily introduced.

When the system is combined with a subaddress-compatible PBX, we can enjoy the peculiar effect as described below. Specifically, a support center or the like for accepting failures, troubles, etc. of commodities is adapted to preliminarily provide and correlate subaddresses to respective commodities or to respective failure examples and assign reception telephones to the respective subaddresses; in this configuration, when the support center has a telephone call, the support center can instantaneously recognize what is the purpose of the call of the end user, based upon which telephone is ringing, and provide prompt action. If professional receptionists responsible for the respective commodities are assigned, the end user can dial a subaddress-added telephone number to be directly connected to a professional receptionist responsible for a commodity in question.

In the case where dial-in telephone numbers are set for respective departments in a company, if individual subaddresses for attending staffs are added to a dial-in telephone number of each department on its own, it becomes feasible to allocate individual subaddress-added telephone numbers even in the current number system, thereby enabling individual termination at each staff.

### [Second Embodiment]

An embodiment in which the present invention is applied to CTI will be described as the second embodiment. Since the configuration of the communication system in the second embodiment is much the same as the configuration of Fig. 1 described above, the description thereof is omitted herein. However, the transmission part 12 of cellular phone 10 has a function of creating the request information also containing a telephone number of the originating cellular phone 10 (hereinafter also referred to as "originating number") in addition to the subaddress-added telephone number and transmitting the request information to server 40.

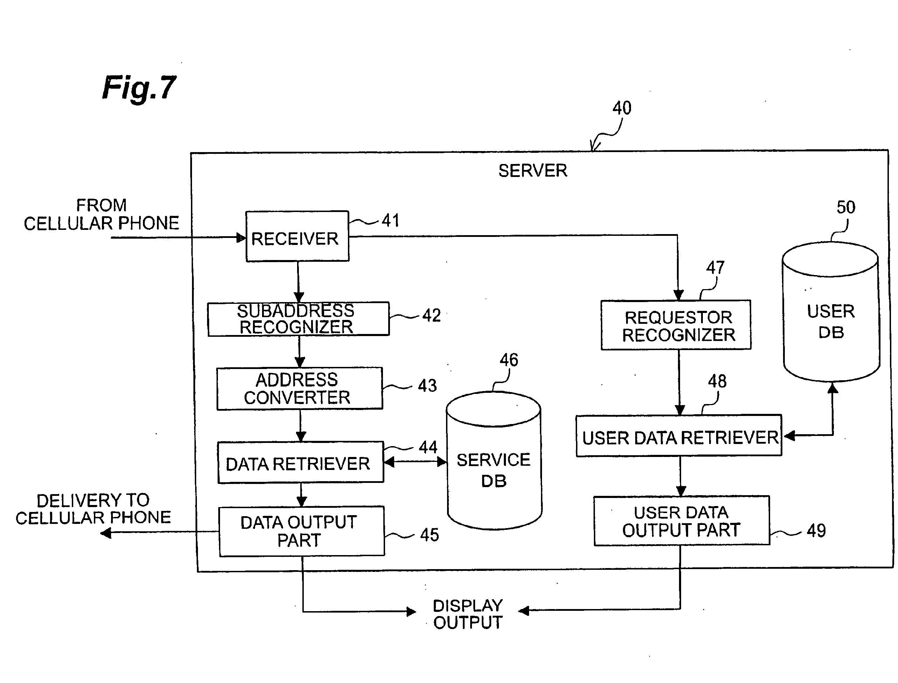

As shown in Fig. 7, the server 40 in the second embodiment is constructed in a configuration wherein the following functional blocks are added to the server in the first embodiment of Fig. 2. Namely, the server 40 of the second embodiment is configured to further include user database 50 in which user data about end users of requestor cellular phones 10 is stored in correlation with originating numbers; requestor recognizer 47 for recognizing an originating number included in the request information from cellular phone 10; user data retriever 48 for retrieving user data correlated with the recognized originating number from the user database 50; and user data output part 49 for displaying the retrieved user data for the operator of the server 40.

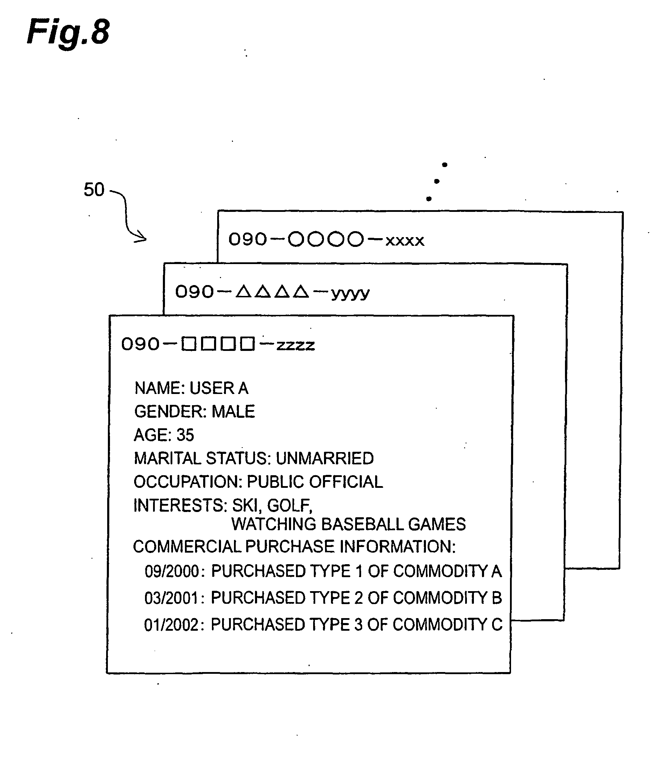

Among these parts, the user database 50 stores the user data containing personal information (name, gender, age, married or unmarried, occupation, interests, etc.) and past CTI use information (commercial purchase information) about each end user who owns the requestor cellular phone 10, in correlation with the originating number (090-□□□□-zzzz or the like) as shown in Fig. 8.

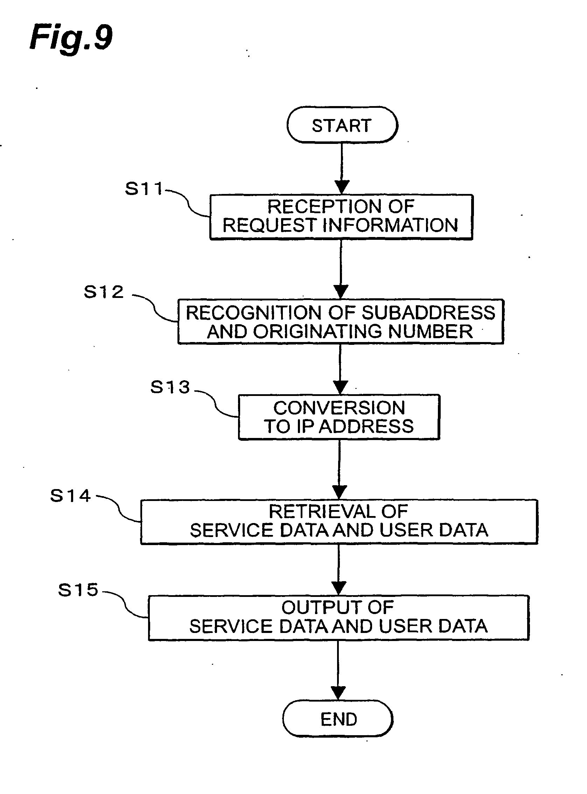

The operation of server 40 will be described below as the operation of the second embodiment on the basis of Fig. 9. When at server 40 the receiver 41 receives the request information 60 from the requestor cellular phone 10 (S11), the subaddress recognizer 42 recognizes the subaddress included in the received request information and the requestor recognizer 47 recognizes the originating number included in the received request information (S12). Then the address converter 43 converts the recognized subaddress to an IP address on the basis of the predetermined conversion correspondence information (S13).

Then the data retriever 44 retrieves commodity data (e.g., data of various commodities provided in the CTI system or the like) correlated with the IP address obtained by the conversion, from the service database 46 and the user data retriever 48 retrieves user data correlated with the recognized originating number from the user database 50 of Fig. 8 (S14). Furthermore, in S15 the data output part 45 provides an output of the retrieved commodity data by delivering it to the requestor cellular phone 10 and also displaying the data for the operator on the server 40 side. At the same as it, the user data output part 49 provides an output of the retrieved user data by displaying the data for the operator on the server 40 side.

When the request information also containing the originating number of the originating cellular phone in addition to the subaddress-added telephone number is transmitted to server 40 as described above, the server 40 provided with the user database 50 is able to recognize the originating number included in the received request information, retrieve the user data correlated with the originating number recognized, from the user database 50, and display the user data for the operator on the server 40 side.

The above second embodiment provides the effect similar to that of the first embodiment, and it can provide the automatic display output of the user data of the requestor user, using the originating number of the originating cellular phone as a key, and permit the server-side operator to quickly gain the user data of the requestor user.

The application to the CTI system achieves the peculiar effect as described below. Specifically, subaddresses are preliminarily allocated and correlated to all commodities in the CTI system, whereby at the time of receiving a telephone call at the center of the CTI system the center can instantaneously capture the order content of the end user and provide prompt action.

In the configuration wherein the support center or the like for accepting failures, troubles, etc. of commodities preliminarily allocates subaddresses to the respective commodities or to the respective failure examples in correlation with each other, the center can instantaneously recognize what is the purpose of a telephone call made by the end user, at the time of receiving the telephone call at the center of the CTI system, and can provide prompt action.

By increasing digits of subaddresses and generating unique random numbers, it becomes feasible to generate a number of unique addresses, and then the subaddress-added telephone numbers can be used like one-time passwords. For example, it becomes feasible to provide a content that can be used only in a specific time zone in a TV program, a radio program, a fan club, or the like. In the case of ticket reservations of a popular artist or the like, a subaddress-added telephone number dedicated to the ticket reservations of the artist can be temporarily or constantly set, which facilitates the operation for the ticket reservations by end users and also facilitates the work of accepting the reservations.

The VoIP (Voice Over Internet Protocol) technology of converting audio to IP data (data transmitted and received by making use of Internet protocols) and transmitting and receiving the IP data is spreading in recent years. When this VoIP is utilized in the present invention to set individual IP telephones, instead of contents, as terminating addresses using the subaddresses, it becomes feasible to terminate calls from cellular phones at the individual IP telephones. The present invention can provide the excellent effect that the subaddresses are provided with the function equivalent to URLs on the Internet as described above.

If the present invention is applied in Europe (particularly, in France) where ISDN networks are in widespread use in stationary networks, a quick spread can be expected with excellent effect.

In the case where potable information terminals like cellular phones are provided with a position detecting function such as the GPS function, it is feasible to implement the following processing in collaboration with a taxi dispatch service of a taxi company. Specifically, when an end user enters a subaddress-added telephone number corresponding to an order of the dispatch service in a cellular phone, the cellular phone detects the location of its own by GPS and sends the detected location information and the subaddress-added telephone number to a dispatch center of the taxi company. A server at the dispatch center receives the subaddress-added telephone number and recognizes it as data with the location information, whereby it can quickly specify the location of the end user from the location information and provide a quick and accurate dispatch service to the end user.

Just as in the case of the above dispatch service, it is also contemplated that at the event of occurrence of an accident, an informant enters a subaddress-added telephone number in which a predetermined subaddress is added to number 119 (or number 110), in a cellular phone, whereupon the cellular phone detects the location of its own by GPS and sends the detected location information and the subaddress-added telephone number to a fire station or the like. A server at the fire station or the like receives the subaddress-added telephone number and recognizes it as data with the location information whereby the server can quickly specify the location of the informant (i.e., the location where the accident occurred) from the location information and quickly deliver an ambulance, a fire engine, or the like to the location where the accident occurred.

### Industrial Applicability

As described above, the present invention dramatically increased the number of numbers available for allocation by making use of the subaddresses attached to telephone numbers, and thus achieved the liberation from the conventional constraint on the total number of dial-in numbers. The service providers are not allowed to allocate telephone numbers at the discretion thereof, whereas the service providers are allowed to allocate subaddresses at the discretion thereof; therefore, the flexibility can be enhanced in allocation of numbers. With increase in the number of numbers available for allocation and increase in the flexibility in allocation, it becomes feasible to allocate numbers finely to target commodities or target contents and to specify a target commodity or a target content easier and display or transmit it by simple operation.

## Claims

1. A communication system (1) comprising an information terminal (10) for an end user to request provision of a service or delivery of a content; and a server (40) for carrying out provision of a service or delivery of a content according to a request, wherein said information terminal (10) comprises:
- input means (11) for input of a subaddress-added telephone number in which a subaddress (60B) corresponding to the service or content requested is added to a telephone number (60A) corresponding to the server (40) as a requestee; and
- transmitting means (12) for transmitting request information (60) containing the input subaddress-added telephone number, through a circuit switching network to the server (40), and
wherein said server (40) comprises:
- a service database (46) in which service data about the service or content data is stored in correlation with IP addresses;
- receiving means (41) for receiving the request information (60) from the information terminal (10) as a requestor;
- subaddress recognizing means (42) for recognizing the subaddress (60B) included in the received request information (60);
- address converting means (43) for converting the recognized subaddress (60B) to an IP address, based on a predetermined rule or predetermined correlation information;
- data retrieving means (44) for retrieving service data or content data correlated with the IP address obtained by the conversion, from the service database (46); and
- data outputting means (45) for providing an output of the retrieved service data or content data by transmitting the data to the requestor information terminal (10) or by displaying the data for an operator on the server (40) side,
**characterized in that**
the transmitting means (12) of the information terminal (10) transmits the request information (60) also containing a telephone number of the information terminal (10) in addition to the subaddress-added telephone number, to the server (40), wherein the server (40) further comprises:
- a user database (50) in which user data about the end user of the requestor information terminal (10) is stored in correlation with the telephone number of the requestor information terminal (10);
- requestor recognizing means (47) for recognizing the telephone number of the requestor information terminal (10) included in the received request information (60);
- user data retrieving means (48) for retrieving the user data correlated with the recognized telephone number, from the user database (50); and
- user data outputting means (49) for providing an output of the retrieved user data by displaying the data for the operator on the server (40) side.

2. The communication system (1) according to Claim 1, wherein the subaddress (60B) is defined in correlation with a predetermined classification about a commodity or a service.

3. The communication system (1) according to Claim 1 or 2, wherein the input means (11) of the information terminal (10) is configured so that the subaddress-added telephone number can be entered by end user's selection on a predetermined screen displaying a candidate for input of the subaddress-added telephone number or by end user's direct entry.

4. A data processing control method executed in a communication system (1), the communication system (1) comprising:
- an information terminal (10) for an end user to request provision of a service or delivery of a content; and
- a server (40) comprising a service database (46) in which service data about the service or content data is stored in correlation with IP addresses, and configured to perform provision of a service or delivery of a content according to a request,
said data processing control method comprising:
- an inputting step of inputting a subaddress-added telephone number in which a subaddress (60B) corresponding to the service or content requested is added to a telephone number (60A) corresponding to the server (40) as a requestee, at the information terminal (10);
- a transmitting step of transmitting request information (60) containing the input subaddress-added telephone number, through a circuit switching network to the server (40), at the information terminal (10);
- a receiving step (S11) of receiving the request information (60) from the information terminal (10) as a requestor, at the server (40);
- a subaddress recognizing step (S12) of recognizing the subaddress (60B) included in the received request information (60), at the server (40);
- an address converting step (S13) of converting the recognized subaddress (60B) to an IP address, based on a predetermined rule or predetermined correlation information, at the server (40);
- a data retrieving step (S14) of retrieving from the service database (46), service data or content data correlated with the IP address obtained by the conversion, at the server (40); and
- a data outputting step (S15) of providing an output of the retrieved service data or content data by transmitting the data to the requestor information terminal (10) or by displaying the data for an operator on the server (40) side, at the server (40),
**characterized in that**
the transmitting step further comprises transmission of a telephone number of the information terminal (10) in addition to the subaddress-added telephone number, to the server (40), wherein the server (40) further comprises:
- a user database (50) in which user data about the end user of the requestor information terminal (10) is stored in correlation with the telephone number of the requestor information terminal (10);
- requestor recognizing means (47) for recognizing the telephone number of the requestor information terminal (10) included in the received request information (60);
- user data retrieving means (48) for retrieving the user data correlated with the recognized telephone number, from the user database (50); and
- user data outputting means (49) for providing an output of the retrieved user data by displaying the data for the operator on the server (40) side.

5. A server (40) for performing provision of a service or delivery of a content in response to a request for provision of the service or a request for delivery of the content made by an end user, the server (40) comprising:
- a service database (46) in which service data about the service or content data is stored in correlation with IP addresses;
- receiving means (41) for receiving request information (60) containing a subaddress-added telephone number in which a subaddress (60B) corresponding to the service or content requested is added to a telephone number (60A) corresponding to the server (40) as a requestee, through a circuit switching network from an information terminal (10) as a requestor;
- subaddress recognizing means (42) for recognizing the subaddress (60B) included in the received request information (60);
- address converting means (43) for converting the recognized subaddress (60B) to an IP address, based on a predetermined rule or predetermined correlation information;
- data retrieving means (44) for retrieving service data or content data correlated with the IP address obtained by the conversion, from the service database (46); and
- data outputting means (45) for providing an output of the retrieved service data or content data by transmitting the data to the requestor information terminal (10) or by displaying the data for an operator on the server (40) side,
**characterized in that**
a transmitting means (12) of the requestor information terminal (10) transmits the request information (60) also containing a telephone number of the requestor information terminal (10) in addition to the subaddress-added telephone number, to the server (40), wherein the server (40) further comprises:
- a user database (50) in which user data about the end user of the requestor information terminal (10) is stored in correlation with the telephone number of the requestor information terminal (10);
- requestor recognizing means (47) for recognizing the telephone number of the requestor information terminal (10) included in the received request information (60);
- user data retrieving means (48) for retrieving the user data correlated with the recognized telephone number, from the user database (50); and
- user data outputting means (49) for providing an output of the retrieved user data by displaying the data for the operator on the server (40) side.

6. A data processing control program to be executed by a computer mounted on a server (40) comprising a service database (46) in which service data about a service or content data is stored in correlation with IP addresses; and adapted to perform provision of a service or delivery of a content in response to a request for provision of the service or a request for delivery of the content made by an end user, said data processing control program letting the computer execute the following steps;
- a receiving step (S11) of receiving request information (60) containing a subaddress-added telephone number in which a subaddress (60B) corresponding to the service or content requested is added to a telephone number (60A) corresponding to the server (40) as a requestee, through a circuit switching network from an information terminal (10) as a requestor;
- a subaddress recognizing step (S12) of recognizing the subaddress (60B) included in the received request information (60);
- an address converting step (S13) of converting the recognized subaddress (60B) to an IP address, based on a predetermined rule or predetermined correlation information;
- a data retrieving step (S14) of retrieving service data or content data correlated with the IP address obtained by the conversion, from the service database (46); and
- a data outputting step (S15) of providing an output of the retrieved service data or content data by transmitting the data to the requestor information terminal (10) or by displaying the data for an operator on the server (40) side,
**characterized in that**
a transmitting means (12) of the requestor information terminal (10) transmits the request information (60) also containing a telephone number of the requestor information terminal (10) in addition to the subaddress-added telephone number, to the server (40), wherein the server (40) further comprises:
- a user database (50) in which user data about the end user of the requestor information terminal (10) is stored in correlation with the telephone number of the requestor information terminal (10);
- requestor recognizing means (47) for recognizing the telephone number of the requestor information terminal (10) included in the received request information (60);
- user data retrieving means (48) for retrieving the user data correlated with the recognized telephone number, from the user database (50); and
- user data outputting means (49) for providing an output of the retrieved user data by displaying the data for the operator on the server (40) side.

## Patentansprüche

1. Kommunikationssystem (1), aufweisend ein Informationsdatenendgerät (10) für einen Endbenutzer, um ein Bereitstellen eines Dienstes oder ein Liefern eines Inhaltes anzufordern; und einen Server (40), um ein Bereitstellen eines Dienstes oder ein Liefern eines Inhaltes gemäß einer Anfrage auszuführen, wobei das Informationsdatenendgerät (10) aufweist:
- eine Eingabeeinrichtung (11) zum Eingeben einer eine hinzugefügte Unteradresse aufweisenden Telefonnummer, bei der eine Unteradresse (60B) entsprechend dem angeforderten Dienst oder Inhalt zu einer Telefonnummer (60A) hinzugefügt wird, die dem Server (40) als Einrichtung, an welche die Anfrage gestellt wird, entspricht; und
- eine Sendeeinrichtung (12), um die Anfrageinformation (60), welche die eingegebene eine hinzugefügte Unteradresse aufweisende Telefonnummer enthält, über ein Durchschaltvermittlungsnetz an der Server (40) zu senden; und
wobei der Server (40) aufweist:
- eine Dienst-Datenbank (46), in der Dienstdaten betreffend den Dienst oder Inhaltsdaten in Korrelation mit IP-Adressen gespeichert werden;
- eine Empfangseinrichtung (41) zum Empfangen der Anfrageinformation (60) vom Informationsdatenendgerät (10) als anfragende Einrichtung;
- eine Unteradressen-Erkennungseinrichtung (42) zum Erkennen der Unteradresse (60B), die in der empfangenen Anfrageinformation (60) enthalten ist;
- eine Adressenumwandlungseinrichtung (43) zum Umwandeln der erkannten Unteradresse (60B) in eine IP-Adresse, basierend auf einer vorbestimmten Regel oder einer vorbestimmten Korrelationsinformation;
- eine Datenabrufeinrichtung (44), welche Dienstdaten oder Inhaltsdaten, die mit der durch die Umwandlung erzielten IP-Adresse korrelieren, aus der Dienstdatenbank (46) abruft; und
- eine Datenausgabeeinrichtung (45), die für eine Ausgabe der abgerufenen Dienstdaten oder Inhaltsdaten sorgt, und zwar durch Senden der Daten an das anfragende Informationsdatenendgerät (10) oder durch Anzeigen der Daten für eine Bedienperson aufseiten des Servers (40),
**dadurch gekennzeichnet, dass**
die Sendeeinrichtung (12) des Informationsdatenendgerätes (10) die Anfrageinformation (60), die auch eine Telefonnummer des Informationsdatenendgerätes (10), zusätzlich zu der die hinzugefügte Unteradresse aufweisenden Telefonnummer aufweist, an den Server (40) sendet, wobei der Server (40) weiter aufweist:
- eine Benutzerdatenbank (50), in der Benutzerdaten betreffend den Endbenutzer des anfragenden Informationsdatenendgerätes (10) in Korrelation mit der Telefonnummer des anfragenden Informationsdatenendgerätes (10) gespeichert werden;
- eine anfragende Erkennungseinrichtung (47) zum Erkennen der Telefonnummer des anfragenden Informationsdatenendgerätes (10), die in der empfangenen Anfrageinformation (60) enthalten ist;
- eine Benutzerdaten-Abrufeinrichtung (48), welche die Benutzerdaten, die mit der erkannten Telefonnummer korreliert sind, aus der Benutzerdatenbank (50) abruft; und
- eine Benutzerdaten-Ausgabeeinrichtung (49), die für eine Ausgabe der abgerufenen Benutzerdaten durch Anzeigen der Daten für die Bedienperson aufseiten des Servers (40) sorgt.

2. Kommunikationssystem (1) nach Anspruch 1, bei dem die Unteradresse (60B) in Korrelation mit einer vorbestimmten Klassifikation betreffend eine Handelsware oder eine Dienstleistung definiert ist.

3. Kommunikationssystem (1) nach Anspruch 1 oder 2, bei dem die Eingabeeinrichtung (11) des Informationsdatenendgerätes (10) so konfiguriert ist, dass die die hinzugefügte Unteradresse aufweisende Telefonnummer **dadurch** eingegeben werden kann, dass ein Auswählen durch einen Endbenutzer auf einem vorbestimmten Bildschirm, der einen Kandidaten zur Eingabe der die hinzugefügte Unteradresse aufweisenden Telefonnummer anzeigt, erfolgt oder eine direktes Eingeben durch einen Endbenutzer erfolgt.

4. Datenverarbeitungssteuerverfahren, das in einem Kommunikationssystem (1) ausgeführt wird, wobei das Kommunikationssystem (1) aufweist:
- ein Informationsdatenendgerät (10) für einen Endbenutzer, um eine Bereitstellung eines Dienstes oder eine Lieferung eines Inhaltes anzufordern; und
- einen Server (40), der eine Dienst-Datenbank (46) aufweist, in der Dienstdaten betreffend den Dienst oder Inhaltsdaten in Korrelation im IP-Adressen gespeichert sind, und der konfiguriert ist, um ein Bereitstellen eines Dienstes oder eine Lieferung eines Inhaltes gemäß einer Anfrage durchzuführen,
wobei das Datenverarbeitungssteuerverfahren aufweist:
- einen Eingabeschritt, bei dem eine eine hinzugefügte Unteradresse aufweisende Telefonnummer, bei der eine Unteradresse (60B) entsprechend dem angeforderten Dienst oder Inhalt zu einer Telefonnummer (60A) hinzugefügt wird, die dem Server (40) als Einrichtung, an welche die Anfrage gestellt wird, entspricht, beim Informationsdatenendgerät eingegeben wird; und
- einen Sendeschritt (12), bei dem die Anfrageinformation (60), welche die eingegebene eine hinzugefügte Unteradresse aufweisende Telefonnummer enthält, über ein Durchschaltvermittlungsnetz an der Server (40) gesendet wird, und zwar beim Informationsdatenendgerät (40);
- einen Empfangsschritt (S11), bei dem die Anfrageinformation (60) vom Informationsdatenendgerät (10) als anfragende Einrichtung beim Server (40) empfangen wird;
- einen Unteradressen-Erkennungsschritt (S12), bei dem die Unteradresse (60B), die in der empfangenen Anfrageinformation (60) enthalten ist, beim Server (40) erkannt wird;
- einen Adressenumwandlungsschritt (S13), bei dem die erkannte Unteradresse (60B) in eine IP-Adresse, basierend auf einer vorbestimmten Regel oder einer vorbestimmten Korrelationsinformation, bei Server (40) umgewandelt wird;
- einen Datenabrufschritt (S14), bei dem von der Dienstdatenbank (46) Dienstdaten oder Inhaltsdaten, die mit der durch die Umwandlung erhaltenen IP-Adresse korreliert sind, beim Server (40) abgerufen werden; und
- einen Datenausgabeschritt (S15), bei dem eine Ausgabe der abgerufenen Dienstdaten oder Inhaltsdaten, durch Senden der Daten an das anfragende Informationsdatenendgerät (10) oder durch Anzeigen der Daten für eine aufseiten des Servers (40) befindliche Bedienperson, beim Server (40) bereitgestellt wird,
**dadurch gekennzeichnet, dass**
der Sendeschritt weiter beinhaltet, dass eine Telefonnummer des Informationsdatenendgerätes (10), zusätzlich zu der die hinzugefügte Unteradresse aufweisenden Telefonnummer, an den Server (40) gesendet wird, wobei der Server (40) weiter aufweist:
- eine Benutzerdatenbank (50), in der Benutzerdaten betreffend den Endbenutzer des anfragenden Informationsdatenendgerätes (10) in Korrelation mit der Telefonnummer des anfragenden Informationsdatenendgerätes (10) gespeichert werden;
- eine anfragende Erkennungseinrichtung (47) zum Erkennen der Telefonnummer des anfragenden Informationsdatenendgerätes (10), die in der empfangenen Anfrageinformation (60) enthalten ist;
- eine Benutzerdaten-Abrufeinrichtung (48), welche die Benutzerdaten, die mit der erkannten Telefonnummer korreliert sind, aus der Benutzerdatenbank (50) abruft; und
- eine Benutzerdaten-Ausgabeeinrichtung (49), die für eine Ausgabe der abgerufenen Benutzerdaten durch Anzeigen der Daten für die Bedienperson aufseiten des Servers (40) sorgt.

5. Server (40), der eine Bereitstellung eines Dienstes oder eine Lieferung eines Inhaltes ansprechend auf eine Anfrage zur Bereitstellung des Dienstes oder eine Anfrage zur Lieferung des Inhaltes, die von einem Endbenutzer vorgenommen wird, durchführt, wobei der Server (40) aufweist:
- eine Dienst-Datenbank (46), in der Dienstdaten betreffend den Dienst oder Inhaltsdaten in Korrelation mit IP-Adressen gespeichert werden;
- eine Empfangseinrichtung (41) zum Empfangen von Anfrageinformation (60), die eine eine hinzugefügte Unteradresse aufweisende Telefonnummer enthält, in der eine Unteradresse (60B), die dem Dienst oder dem angeforderten Inhalt entspricht, einer Telefonnummer (60A) hinzugefügt wird, die dem Server (40) als Einrichtung, an welche die Anfrage gestellt wird, entspricht, und zwar über ein Durchschaltvermittlungsnetz von einem Informationsdatenendgerät (10) als anfragende Einrichtung;
- eine Unteradressen-Erkennungseinrichtung (42) zum Erkennen der Unteradresse (60B), die in der empfangenen Anfrageinformation (60) enthalten ist;
- eine Adressenumwandlungseinrichtung (43) zum Umwandeln der erkannten Unteradresse (60B) in eine IP-Adresse, basierend auf einer vorbestimmten Regel oder einer vorbestimmten Korrelationsinformation;
- eine Datenabrufeinrichtung (44), welche Dienstdaten oder Inhaltsdaten, die mit der durch die Umwandlung erzielten IP-Adresse korrelieren, aus der Dienstdatenbank (46) abruft; und
- eine Datenausgabeeinrichtung (45), die für eine Ausgabe der abgerufenen Dienstdaten oder Inhaltsdaten sorgt, und zwar durch Senden der Daten an das anfragende Informationsdatenendgerät (10) oder durch Anzeigen der Daten für eine Bedienperson aufseiten des Servers (40),
**dadurch gekennzeichnet, dass**
die Sendeeinrichtung (12) des Informationsdatenendgerätes (10) die Anfrageinformation (60), die auch eine Telefonnummer des anfragenden Informationsdatenendgerätes (10), zusätzlich zu der die hinzugefügte Unteradresse aufweisenden Telefonnummer aufweist, an den Server (40) sendet, wobei der Server (40) weiter aufweist:
- eine Benutzerdatenbank (50), in der Benutzerdaten betreffend den Endbenutzer des anfragenden Informationsdatenendgerätes (10) in Korrelation mit der Telefonnummer des anfragenden Informationsdatenendgerätes (10) gespeichert werden;
- eine Anfrager-Erkennungseinrichtung (47) zum Erkennen der Telefonnummer des anfragenden Informationsdatenendgerätes (10), die in der empfangenen Anfrageinformation (60) enthalten ist;
- eine Benutzerdaten-Abrufeinrichtung (48), welche die Benutzerdaten, die mit der erkannten Telefonnummer korreliert sind, aus der Benutzerdatenbank (50) abruft; und
- eine Benutzerdaten-Ausgabeeinrichtung (49), die für eine Ausgabe der abgerufenen Benutzerdaten durch Anzeigen der Daten für die Bedienperson aufseiten des Servers (40) sorgt.

6. Datenverarbeitungssteuerprogramm, das durch einen Computer auszuführen ist, der auf einem Server (40) montiert ist, aufweisend eine Dienstdatenbank (46), in der Dienstdaten betreffend einen Dienst oder Inhaltsdaten in Korrelation mit IP-Adressen gespeichert werden; und das ausgebildet ist, um ein Bereitstellen eines Dienstes oder eine Lieferung eines Inhaltes ansprechend auf eine Anfrage zur Bereitstellung des Dienstes oder eine Anfrage zur Lieferung des Inhaltes, die durch einen Endbenutzer vorgenommen wird, durchzuführen, wobei das Datenverarbeitungssteuerprogramm den Computer die folgenden Schritte ausführen lässt:
- einen Empfangsschritt (S11), bei dem Anfrageinformation (60), die eine eine hinzugefügte Unteradresse aufweisende Telefonnummer beinhaltet, bei der eine Unteradresse (60B) entsprechend dem angeforderten Dienst oder Inhalt einer Telefonnummer (60A) hinzugefügt wird, die dem Server (40) als die Einrichtung, an welche die Anfrage gestellt wird, entspricht, über ein Durchschaltvermittlungsnetz von einem Informationsdatenendgerät (10) als anfragende Einrichtung empfangen wird;
- einen Unteradressen-Erkennungsschritt (S12), bei dem die Unteradresse (60B), die in der empfangenen Anfrageinformation (60) enthalten ist, erkannt wird;
- einen Adressenumwandlungsschritt (S13), bei dem die erkannte Unter-adresse (60B) in eine IP-Adresse, basierend auf einer vorbestimmten Regel oder einer vorbestimmten Korrelationsinformation, umgewandelt wird;
- einen Datenabrufschritt (S14), bei dem Dienstdaten oder Inhaltsdaten, die mit der durch die Umwandlung erhaltenen IP-Adresse korreliert sind, von der Dienstdatenbank (46) abgerufen werden; und
- einen Datenausgabeschritt (S15), bei dem eine Ausgabe der abgerufenen Dienstdaten oder Inhaltsdaten, durch Senden der Daten an das anfragende Informationsdatenendgerät (10) oder durch Anzeigen der Daten für eine aufseiten des Servers (40) befindliche Bedienperson, bereitgestellt wird,
**dadurch gekennzeichnet, dass**
eine Sendeeinrichtung (12) des anfragenden Informationsdatenendgerätes (10) die Anfrageinformation (60), die auch eine Telefonnummer des anfragenden Informationsdatenendgerätes (10) enthält, zusätzlich zu der die hinzugefügte Unteradresse aufweisenden Telefonnummer, an den Server (40) sendet, wobei der Server (40) weiter aufweist:
- eine Benutzerdatenbank (50), in der Benutzerdaten betreffend den Endbenutzer des anfragenden Informationsdatenendgerätes (10) in Korrelation mit der Telefonnummer des anfragenden Informationsdatenendgerätes (10) gespeichert werden;
- eine Anfrager-Erkennungseinrichtung (47) zum Erkennen der Telefonnummer des anfragenden Informationsdatenendgerätes (10), die in der empfangenen Anfrageinformation (60) enthalten ist;
- eine Benutzerdaten-Abrufeinrichtung (48), welche die Benutzerdaten, die mit der erkannten Telefonnummer korreliert sind, aus der Benutzerdatenbank (50) abruft; und
- eine Benutzerdaten-Ausgabeeinrichtung (49), die für eine Ausgabe der abgerufenen Benutzerdaten durch Anzeigen der Daten für die Bedienperson aufseiten des Servers (40) sorgt.

## Revendications

1. Système de communication (1) comprenant un terminal d'informations (10) pour un utilisateur final pour demander la fourniture d'un service ou la livraison d'un contenu ; et un serveur (40) pour réaliser la fourniture d'un service ou la livraison d'un contenu selon une demande, dans laquelle ledit terminal d'informations (10) comprend :
- un moyen d'entrée (11) pour l'entrée d'un numéro de téléphone avec sous-adresse ajoutée dans lequel une sous-adresse (60B) correspondant au service ou contenu demandé est ajoutée à un numéro de téléphone (60A) correspondant au serveur (40A) comme un demandé ; et
- un moyen de transmission (12) pour transmettre des informations de demande (60) contenant le numéro de téléphone avec sous-adresse ajoutée d'entrée, à travers un réseau à commutation de circuit au serveur (40) ; et
dans lequel ledit serveur (40) comprend :
- une base de données de service (46) dans laquelle des données de service concernant le service ou les données de contenu sont stockées dans une corrélation avec des adresses IP ;
- un moyen de réception (41) pour recevoir les informations de demande (60) du terminal d'informations (10) comme un demandeur ;
- un moyen de reconnaissance de sous-adresse (42) pour reconnaître la sous-adresse (60B) comprise dans les informations de demande reçues (60) ; et
- un moyen de conversion d'adresse (43) pour convertir la sous-adresse reconnue (60B) en une adresse IP, sur la base d'une règle prédéterminée ou d'informations de corrélation prédéterminées ;
- un moyen de récupération de données (44) pour récupérer des données de service ou des données de contenu corrélées avec l'adresse IP obtenue par la conversion, à partir de la base de données de service (46) ; et
- un moyen de fourniture de données (45) pour fournir une sortie des données de service récupérées ou des données de contenu par transmission des données au terminal d'informations demandeur (10) ou par affichage des données pour un opérateur du côté serveur (40),
**caractérisé en ce que**
le moyen de transmission (12) du terminal d'informations (10) transmet les informations de demande (60) contenant aussi un numéro de téléphone du terminal d'informations (10) en plus du numéro de téléphone avec sous-adresse ajoutée, au serveur (40), dans lequel le serveur (40) comprend en outre :
- une base de données d'utilisateur (50) dans laquelle des données d'utilisateur concernent l'utilisateur final du terminal d'informations demandeur (10) sont stockées en corrélation avec le numéro de téléphone du terminal d'informations demandeur (10) ;
- un moyen de reconnaissance de demandeur (47) pour reconnaître le numéro de téléphone du terminal d'informations demandeur (10) compris dans les informations de demande reçues (60) ;
- un moyen de récupération de données d'utilisateur (48) pour récupérer les données d'utilisateur corrélées avec le numéro de téléphone reconnu, à partir de la base de données d'utilisateur (50) ; et
- un moyen de fourniture de données d'utilisateur (49) pour fournir une sortie des données d'utilisateur récupérées en affichant les données pour l'opérateur du côté serveur (40).

2. Système de communication (1) selon la revendication 1, dans lequel la sous-adresse (60B) est définie en corrélation avec une classification prédéterminée concernant un produit ou un service.

3. Système de communication (1) selon la revendication 1 ou 2, dans lequel le moyen d'entrée (11) du terminal d'informations (10) est configuré pour que le numéro de téléphone avec sous-adresse ajoutée puisse être introduit par une sélection d'utilisateur final sur un écran prédéterminé affichant un candidat pour l'entrée du numéro de téléphone avec sous-adresse ajoutée ou par une entrée directe d'utilisateur final.

4. Procédé de commande de traitement de données exécuté dans un système de communication (1), le système de communication (1) comprenant:
- un terminal d'informations (10) pour un utilisateur final pour demander la fourniture d'un service ou la livraison d'un contenu ; et
- un serveur (40) comprenant une base de données de service (46) dans lequel des données de service concernant les données de service ou de contenu sont stockées en corrélation avec des adresses IP, et configurées pour réaliser la fourniture d'un service ou la livraison d'un contenu selon une demande,
ledit procédé de commande de traitement de données comprenant :
- une étape d'entrée pour entrer un numéro de téléphone avec sous-adresse ajoutée dans lequel une sous-adresse (60B) correspondant au service ou contenu demandé est ajoutée à un numéro de téléphone (60A) correspondant au serveur (40) comme un demandé, sur le terminal d'informations (10) ;
- une étape de transmission pour transmettre des informations de demande (60) contenant le numéro de téléphone avec sous-adresse ajoutée d'entrée, à travers un réseau à commutation de circuit au serveur (40), sur le terminal d'informations (10) ;
- une étape de réception (S11) pour recevoir des informations de demande (60) à partir du terminal d'informations (10) comme un demandeur, sur le serveur (40) ;
- une étape de reconnaissance de sous-adresse (S12) pour reconnaître la sous-adresse (60B) comprise dans les informations de demande reçues (60) sur le serveur (40) ;
- une étape de conversion d'adresse (S13) pour convertir la sous-adresse reconnue (60B) en une adresse IP, sur la base d'une règle prédéterminée ou d'informations de corrélation prédéterminées, sur le serveur (40) ;
- une étape de récupération de données (S14) pour récupérer à partir de la base de données de service (46), des données de service ou des données de contenu corrélées avec l'adresse IP obtenue par la conversion, sur le serveur (40) ; et
- une étape de fourniture de données (S15) pour fournir une sortie des données de service récupérées ou des données de contenu par transmission des données au terminal d'informations demandeur (10) ou par affichage des données pour un opérateur du côté serveur (40), sur le serveur (40),
**caractérisé en ce que**
l'étape de transmission comprend en outre la transmission d'un numéro de téléphone du terminal d'informations (10) en plus du numéro de téléphone avec sous-adresse ajoutée, au serveur (40), dans lequel le serveur (40) comprend en outre :
- une base de données d'utilisateur (50) dans laquelle des données d'utilisateur concernant l'utilisateur final du terminal d'informations demandeur (10) sont stockées en corrélation avec le numéro de téléphone du terminal d'informations demandeur (10) ;
- un moyen de reconnaissance de demandeur (47) pour reconnaître le numéro de téléphone du terminal d'informations demandeur (10) compris dans les informations de demande reçues (60) ;
- un moyen de récupération de données d'utilisateur (48) pour récupérer les données d'utilisateur corrélées avec le numéro de téléphone reconnu, à partir de la base de données d'utilisateur (50) ; et
- un moyen de fourniture de données d'utilisateur (49) pour fournir une sortie des données d'utilisateur récupérées en affichant les données pour l'opérateur du côté serveur (40).

5. Serveur (40) pour réaliser la fourniture d'un service ou la livraison d'un contenu en réponse à une demande pour la fourniture du service ou une demande pour la fourniture du contenu effectuée par un utilisateur final, le serveur (40) comprenant :
- une base de données de service (46) dans laquelle les données de service concernant les données de service ou de contenu sont stockées en corrélation avec des adresses IP ;
- un moyen de réception (41) pour recevoir des informations de demande (60) contenant un numéro de téléphone avec sous-adresse ajoutée dans laquelle une sous-adresse (60B) correspondant au service ou contenu demandé est ajoutée à un numéro de téléphone (60A) correspondant au serveur (40) comme un demandé, à travers un réseau à commutation de circuit à partir d'un terminal d'informations (10) comme un demandeur ;
- un moyen de reconnaissance de sous-adresse (42) pour reconnaître les sous-adresses (60B) comprises dans les informations de demande reçues (60) ;
- un moyen de conversion d'adresse (43) pour convertir la sous-adresse reconnue (60B) en une adresse IP, sur la base d'une règle prédéterminée ou d'informations de corrélation prédéterminées ;
- un moyen de récupération de données (44) pour récupérer des données de service ou des données de contenu corrélées avec l'adresse IP obtenue par la conversion, à partir de la base de données de service (46) ; et
- un moyen de fourniture de données (45) pour fournir une sortie des données de service récupérées ou des données de contenu par transmission des données au terminal d'informations demandeur (10) ou par affichage des données pour un opérateur du côté serveur (40),
**caractérisé en ce que**
un moyen de transmission (12) du terminal d'informations demandeur (10) transmet les informations de demande (60) contenant aussi un numéro de téléphone du terminal d'informations demandeur (10) en plus du numéro de téléphone avec sous-adresse ajoutée, au serveur (40), dans lequel le serveur (40) comprend en outre :
- une base de données d'utilisateur (50) dans laquelle des données d'utilisateur concernant l'utilisateur final du terminal d'informations demandeur (10) sont stockées en corrélation avec le numéro de téléphone du terminal d'informations demandeur (10) ;
- un moyen de reconnaissance demandeur (47) pour reconnaître le numéro de téléphone du terminal d'informations demandeur (10) compris dans les informations de demande reçues (60) ;
- un moyen de récupération de données d'utilisateur (48) pour récupérer les données d'utilisateur corrélées avec le numéro de téléphone reconnu, à partir de la base de données d'utilisateur (50) ; et
- un moyen de fourniture des données d'utilisateur (49) pour fournir une sortie des données d'utilisateur récupérées en affichant les données pour l'opérateur du côté serveur (40).

6. Programme de commande de traitement de données à exécuter par un ordinateur monté sur un serveur (40) comprenant une base de données de service (46) dans lequel des données de service concernant des données de service ou de contenu sont stockées en corrélation avec des adresses IP ; et adapté pour réaliser la fourniture d'un service ou la livraison d'un contenu en réponse à une demande pour la fourniture du service ou une demande pour la fourniture du contenu effectué par un utilisateur final, ledit programme de commande de traitement de données laissant l'ordinateur exécuter les étapes suivantes :
- une étape de réception (S11) pour recevoir des informations de demande (60) contenant un numéro de téléphone avec sous-adresse ajoutée dans laquelle une sous-adresse (60B) correspondant au service ou contenu demandé est ajoutée au numéro de téléphone (60A) correspondant au serveur (40) comme un demandé, à travers un réseau à commutation de circuit à partir d'un terminal d'informations (10) comme un demandeur ;
- une étape de reconnaissance de sous-adresse (S12) pour reconnaître la sous-adresse (60B) comprise dans les informations de demande reçues (60) ;
- une étape de conversion d'adresse (S13) pour convertir la sous-adresse reconnue (60B) en une adresse IP, sur la base d'une règle prédéterminée ou d'informations de corrélation prédéterminées ;
- une étape de récupération de données (S14) pour récupérer les données de service ou de données de contenu corrélées avec l'adresse IP obtenue par la conversion, à partir de la base de données de service (46) ; et
- une étape de fourniture de données (S15) pour fournir une sortie des données de service récupérées ou des données de contenu par transmission des données au terminal d'informations demandeur (10) ou par affichage des données pour un opérateur du côté serveur (40),
**caractérisé en ce que**
un moyen de transmission (12) du terminal d'informations demandeur (10) transmet les informations de demande (60) contenant aussi un numéro de téléphone du terminal d'informations demandeur (10) en plus du numéro de téléphone avec sous-adresse ajoutée, au serveur (40), dans lequel le serveur (40) comprend en outre :
- une base de données d'utilisateur (50) dans laquelle des données d'utilisateur concernant l'utilisateur final du terminal d'informations demandeur (10) sont stockées en corrélation avec le numéro de téléphone du terminal d'informations demandeur (10) ;
- un moyen de reconnaissance de demandeur (47) pour reconnaître le numéro de téléphone du terminal d'informations de demandeur (10) compris dans les informations de demande reçues (60) ;
- un moyen de récupération de données d'utilisateur (48) pour récupérer les données d'utilisateur corrélées avec le numéro de téléphone reconnu, à partir de la base de données d'utilisateur (50) ; et
- un moyen de fourniture de données d'utilisateur (49) pour fournir une sortie des données d'utilisateur récupérées par affichage des données pour l'opérateur du côté serveur (40).
